# EUROPÄISCHE PATENTSCHRIFT

(11) **EP 1 374 559 B1**
(45) Veröffentlichungstag und Bekanntmachung des Hinweises auf die Patenterteilung: **24.05.2006**
(21) Anmeldenummer: 02727252.5
(22) Anmeldetag: 19.03.2002
(51) Int. Cl.: H04N 1/41

(54) **VERFAHREN ZUR KOMPRIMIERUNG UND DEKOMPRIMIERUNG VON BILDDATEN**
METHOD FOR COMPRESSION AND DECOMPRESSION OF IMAGE DATA
PROCEDE DE COMPRESSION ET DE DECOMPRESSION DE DONNEES D'IMAGE

(30) Priorität: 21.03.2001 DE 10113881; 25.10.2001 DE 10152612
(43) Veröffentlichungstag der Anmeldung: 02.01.2004
(73) Patentinhaber: T-Mobile Deutschland GmbH, 53227 Bonn (DE)
(72) Erfinder: MOSSAKOWSKI, Gerd, 59227 Ahlen (DE)
(74) Vertreter: Riebling, Peter
(86) Internationale Anmeldenummer: PCT/DE2002/000995
(87) Internationale Veröffentlichungsnummer: WO 2002/078322

(56) Entgegenhaltungen:
- US-A- 5 647 024
- US-A- 5 675 669
- SIMON S: "Generalized run-length coding for SNR-scalable image compression" SIGNAL PROCESSING VII, THEORIES AND APPLICATIONS. PROCEEDINGS OF EUSIPCO-94. SEVENTH EUROPEAN SIGNAL PROCESSING CONFERENCE, PROCEEDINGS OF EUSIPCO-94 - 7TH EUROPEAN SIGNAL PROCESSING CONFERENCE, EDINBURGH, UK, 13-16 SEPT. 1994, Seiten 560-563 vol.1, XP008007229 1994, Lausanne, Switzerland, Eur. Assoc. Signal Process, Switzerland
- CARLSSON S: "SKETCH BASED CODING OF GREY LEVEL IMAGES" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, Bd. 15, Nr. 1, 1. Juli 1988 (1988-07-01), Seiten 57-83, XP000001795 ISSN: 0165-1684
- YAN J K ET AL: "ENCODING OF IMAGES BASED ON A TWO-COMPONENT SOURCE MODEL" IEEE TRANSACTIONS ON COMMUNICATIONS, IEEE INC. NEW YORK, US, Bd. 25, Nr. 11, 1. November 1977 (1977-11-01), Seiten 1315-1322, XP000644936 ISSN: 0090-6778
- KUNT M ET AL: "SECOND-GENERATION IMAGE-CODING TECHNIQUES" PROCEEDINGS OF THE IEEE, IEEE. NEW YORK, US, Bd. 73, Nr. 4, 1. April 1985 (1985-04-01), Seiten 549-574, XP000611041 ISSN: 0018-9219
- PATENT ABSTRACTS OF JAPAN vol. 017, no. 710 (E-1484), 24. Dezember 1993 (1993-12-24) & JP 05 244435 A (FUJITSU LTD), 21. September 1993 (1993-09-21)
- CHEE Y-K: "SURVEY OF PROGRESSIVE IMAGE TRANSMISSION METHODS" INTERNATIONAL JOURNAL OF IMAGING SYSTEMS AND TECHNOLOGY, WILEY AND SONS, NEW YORK, US, Bd. 10, Nr. 1, 1999, Seiten 3-19, XP000805935 ISSN: 0899-9457
- BELL D M ET AL: "PROGRESSIVE TECHNIQUE FOR HUMAN FACE ARCHIVING AND RETRIEVAL" JOURNAL OF ELECTRONIC IMAGING, SPIE + IS&T, US, Bd. 5, Nr. 2, 1. April 1996 (1996-04-01), Seiten 191-197, XP000596290 ISSN: 1017-9909
- MARSHALL S: "APPLICATION OF IMAGE CONTOURS TO THREE ASPECTS OF IMAGE PROCESSING: COMPRESSION, SHAPE RECOGNITION AND STEREOPSIS" IEE PROCEEDINGS I. SOLID- STATE & ELECTRON DEVICES, INSTITUTION OF ELECTRICAL ENGINEERS. STEVENAGE, GB, Bd. 139, Nr. 1 PART 1, 1. Februar 1992 (1992-02-01), Seiten 1-8, XP000292350 ISSN: 0956-3776

## Beschreibung

Die Erfindung betrifft ein Verfahren zur Komprimierung und Dekomprimierung von Bilddaten.

Zur Abspeicherung von Bildern gibt es heute eine Vielzahl von Techniken und Komprimierungsverfahren. Die verwendeten Techniken lassen sich im wesentlichen auf Pixel-basierte und Vektor-basierte Verfahren zurückführen.

Bei den Pixel-basierten Techniken wird über das Bild ein Raster gelegt. Jeder Rasterpunkt entspricht einem Pixel. Ein Pixelwert wird mit einem Bit (z.B. WBMP -> Schwarz-Weiß) oder mehreren Bits (z.B. BMP -> True-Color) kodiert. Um die Größe der Bilddateien zu reduzieren, können verschiedene Komprimierungsverfahren angewendet werden. Ein effektives Verfahren besteht in der Reduzierung der Bits pro Pixel. Des weiteren können Verfahren angewendet werden, bei denen Pixel zu Gruppen zusammengefasst werden. Dies sind in der Regel quadratische Bereiche, die dann mit Hilfe der DCT (Diskreten Cosinus Transformation) in den Frequenzbereich transformiert werden. Die bei der Transformation entstandenen hohen Frequenzanteile können ohne merkliche Qualitätsverluste vernachlässigt werden. Dieses Verfahren wird z.B. bei JPEG Bildern angewendet. Bei sehr hohen JPEG Kompressionen kann es zu störenden, rechteckig-verschachtelten Bildflecken - sogenannten "Artefakten" - führen.

Bei den Vektor basierten Verfahren wird das Bild mit Hilfe von geometrischen Formen (z.B. Rechtecke, Kreise) eindeutig beschrieben. Ein bekanntes Verfahren ist das sogenannte SVG (Scalable Vector Graphics). Dieses Verfahren ist bei technischen Zeichnungen hervorragend einsetzbar, da so erstellte Bilder sehr gut skalierbar sind. Die entsprechenden Dateien sind deutlich kleiner als bei herkömmlichen binären Bitmap-Formaten. Diese Verfahren eignen sich jedoch weniger um Photos abzuspeichern.

Neben den herkömmlichen Fotoapparaten die auf einem Film belichten, gibt es immer mehr Fotoapparate, die die Fotos anstelle auf einen Film digital auf Speichermedien abspeichern. Da diese Speichermedien nur eine begrenzte Kapazität besitzen, können nur eine kleine Anzahl hochauflösender Fotos, oder viele Bilder mit geringerer Auflösung abgespeichert werden. Eine flexible Skalierung ist zur Zeit nicht möglich.

Der Artikel von SIMON, S.: "Generalized Run-Length Coding for SNRscalable Image Compression", in Signal Processing VII: Theories and Applications, Proceedings of Eusipco-94, Seventh European Signal Processing Conference, Edinburgh, UK, 13-16 Sept. 1994, Seiten 560-563, XP008007229, offenbart ein Verfahren zur Komprimierung von Bilddaten, die aus einem Array einzelner Bildpunkte (Pixel) bestehen, wobei jedes Pixel einen Pixelwert aufweist, der Farb- oder Helligkeitsinformation des Pixels beschreibt. Zur Komprimierung der Bilddaten werden Verfahren auf Basis einer Lauflängencodierung vorgeschlagen.

Die Aufgabe der Erfindung liegt in der Schaffung eines Verfahrens zur Komprimierung und Dekomprimierung von Bilddaten, welches eine einfache und flexible Anpassung an Speichergröße, unterschiedliche Bildauflösungen und Displaygrößen erlaubt.

Diese Aufgabe wird durch die Merkmale des Patentanspruchs 1 gelöst.

Vorteilhafte Ausgestaltungen und Weiterbildungen der Erfindung sind in den Unteransprüchen angegeben.

Die Erfindung beruht auf einer Kombination der Pixel-basierten und Vektorbasierten Technik. Als erstes wird das Bild mit einem Raster belegt. Für jedes Pixel des Rasters wird zunächst der Pixelwert, d.h. Farbwert bzw. Helligkeitswert, ermittelt. Anschließend wird für jeden Pixel, aus einer zuvor festgelegten Menge von benachbarten Pixeln, ein weiterer Wert, im folgenden Pixeldifferenzwert genannt, berechnet. Der Pixeldifferenzwert ergibt sich aus der Differenz des Pixelwerts eines betrachteten Pixels zu jedem seiner betrachteten Nachbarpixel. Dieser Wert ist umso höher, je größer die Differenz des Pixelwertes zu seinen benachbarten Pixeln ist. Anschließend werden die Pixeldifferenzwerte der einzelnen Pixel des Bildes absteigend sortiert. Die für die Berechnung eines Pixeldifferenzwerts hinzugezogenen Pixel werden jeweils zu einer Pixelgruppe zusammengefasst. Die so gewonnenen Pixelgruppen werden entsprechend der absteigenden Sortierung der Pixeldifferenzwerte, d.h. entsprechend ihrer durch den Pixeldifferenzwert bestimmten Priorität, abgespeichert.
Es ergibt sich einen Prioritätenliste, wobei zuoberst auf der Liste diejenigen Pixelgruppen erscheinen, deren Pixeldifferenzwert und damit Priorität am größten ist.

Die Pixelwerte der Pixelgruppen können durch Lauflängencodierung oder andere bekannte Komprimierungsmethoden, z.B. Zip-Verfahren, weiter komprimiert werden.

Zur Wiederherstellung des Bildes werden zunächst die Pixelgruppen mit den höchsten Pixeldifferenzwerten (Prioritäten) geladen. Aus jeweils drei sich am nächsten liegenden Pixelgruppen wird jeweils ein Dreieck gebildet. Dreiecke sind in ihrer Größe skalierbar, und können so an unterschiedliche Auflösungen angepasst werden. Sollen bestimmte Bildbereiche besonders genau wiedergegeben werden, können die Pixelgruppen dieser Bereiche mit einer höheren Priorität versehen werden. Die Fläche der jeweiligen Dreiecke wird durch einen Farbverlauf, der aus den Farbwerten der jeweils drei die Ecken des Dreiecks bildenden Pixelgruppen berechnet wird, ausgefüllt.
Bei Schwarz-Weiß Bildern wird anstelle der Farbwerte der jeweilige Helligkeitswert der Pixel bzw. Pixelgruppen betrachtet und ein entsprechender Helligkeitsverlauf berechnet.
Je mehr Pixelgruppen dargestellt werden, je kleiner werden die Dreiecke und je genauer kann das Bild rekonstruiert werden.

Die Vorteile des erfindungsgemäßen Verfahrens liegen in der hohen Skalierbarkeit durch einfache Anpassung an unterschiedliche Displaygrößen und der Möglichkeit einer erhöhten Auflösung von interessanten Bereichen eines Bildes durch Priorisierung bestimmter Bildbereiche.
Das Verfahren ermöglicht es den Hersteller,bzw. Bildverarbeitungsprofis, durch unterschiedliche Priorisierungen der Pixelgruppen herstellerspezifische Optimierungsroutinen verwenden. Da jedoch immer die Quellpixelwerte übertragen werden, kann das Bild aber auch ohne Verwendung der herstellerspezifischen Optimierungsroutinen wieder erzeugt werden.
Ferner ist eine Erhöhung der Auflösung von Details durch Nachladen der interessanten Bildbereiche, anstelle des Nachladens eines komplett neuen Bildes mit einer anderen Auflösung möglich.
Das Verfahren ist sehr fehlertolerant, da das Bild auch bei Übertragungsfehlern einzelner Pixelgruppen wieder erzeugt werden kann.

Ein Ausführungsbeispiel der Erfindung wird anhand der Zeichnungsfiguren näher erläutert. Aus den Zeichnungen und deren Beschreibung ergeben sich weitere Merkmale, Vorteile und Anwendungsmöglichkeiten der Erfindung. Es zeigt:
- Figur 1:: Darstellung eines Bildarrays aus 20 x 21 Pixeln;
- Figur 2:: Darstellung verschiedener Formen von Pixelgruppen;
- Figur 3:: Neu generiertes Bildarray mit eingefügten Pixelgruppen in der Bildecke;
- Figur 4:: Ausfüllen der Flächen zwischen den bereits eingefügten Pixelgruppen;
- Figur 5:: Einfügen weitere Pixelgruppen und Ausfüllen der dazwischenliegenden Flächen.

Nachfolgend wird anhand eines exemplarischen Beispiels eine Komprimierung und Dekomprimierung einer 2 dimensionalen Bilddatei (Bildarray) beschrieben.

### Folgende Annahmen werden getroffen:

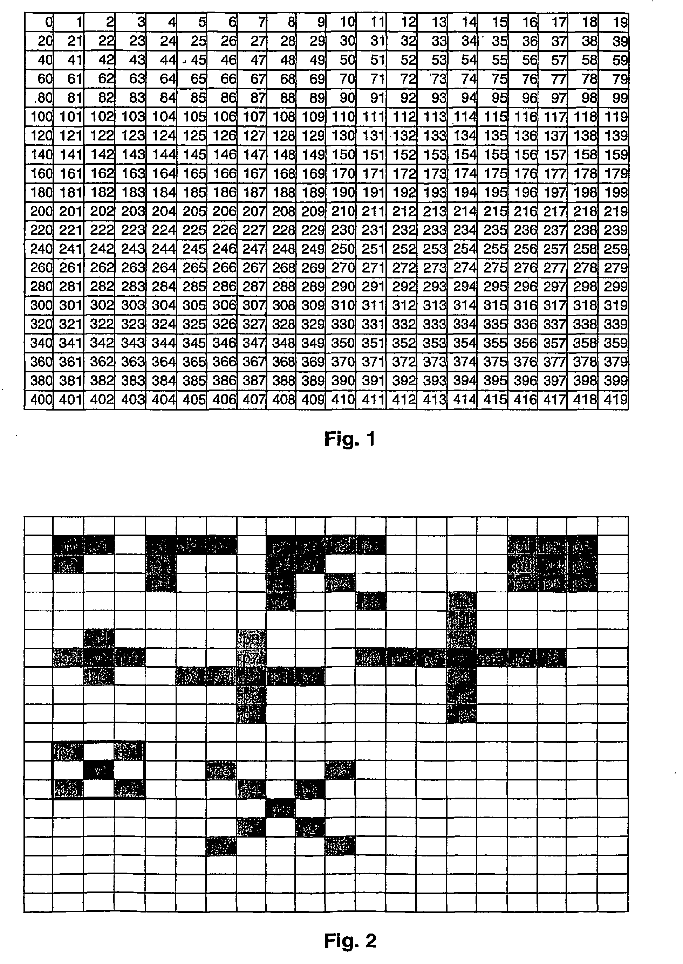

Die Bildquelle liegt als Bitmap, d.h. als Bildarray, vor.
Jedes Pixel des Bildarrays wird durch einen 32 Bit Wert (Pixelwert) repräsentiert. Die 32 Bit sind z.B. in 4 Werte (Transparent, Rot, Grün, Blau) mit jeweils 8 Bit aufgeteilt.
Das beispielhaft dargestellte Bildarray ist ein Bild mit der Bildbreite von 20 Pixeln und einer Bildhöhe von 21 Pixeln. Die Position der Pixel ist durch eine Integer Zahl festgelegt. Das Bildarray wird in der in Figur 1 gezeigten Weise von 0 bis 419 durchgezählt. Die Zahl innerhalb jedes Kastens entspricht der Position des zugehörigen Pixels.

### Die Komprimierung des Bildes erfolgt folgendermaßen:

### Bildarray einlesen

Ein Bild wird in das in Figur 1 gezeigte 20 x 21 Pixel große Bildarray eingelesen. Jedes Pixel ist durch seine Position (0 bis 419) und seinen Pixelwert (Farb- bzw. Helligkeitswert) definiert.

### Pixelgruppen festlegen

Als nächstes wird festgelegt, welche benachbarten Pixel eine Pixelgruppe bilden. Mit p0 ist dabei dasjenige Pixel bezeichnet, das die Position der Pixelgruppe angibt. Die relative Position der übrigen Pixel, z.B. p1-p4, einer Pixelgruppe zum Bezugspixel p0 ergibt sich aus der verwendeten Art (Form) der Pixelgruppe. In Figur 2 sind exemplarisch einige mögliche Formen von Pixelgruppen dargestellt. Es können sowohl zum Bezugspixel p0 symmetrische als auch unsymmetrische Pixelgruppen gebildet werden. Welche Art von Pixelgruppe verwendet wird, ist u.a. von der Art des Bildmaterials und der angestrebten Kompressionsrate abhängig. In der Regel ist der zu erreichende Kompressionsfaktor umso größer, je mehr Pixel eine Pixelgruppe umfasst. Zum kodieren und dekodieren, d.h. komprimieren und dekomprimieren des Bildes muss die gleiche Form von Pixelgruppen verwendet werden.
In der weiteren Beschreibung des Verfahrens wird mit der Form der in Figur 2 dick umrandeten Pixelgruppe (links unten) weitergearbeitet.

### Prioritätswerte ermitteln

Für jedes Pixel p0 einer Pixelgruppe wird nun die Priorität in Bezug auf dessen Pixelgruppe berechnet. Dabei wird jedes Pixel 0 - 419 des Bildes einmal zum Bezugspixel p0.
Die Pixel am Bildrand können eine besondere Behandlung erfahren, z.B. durch Auswahl einer bestimmten Pixelgruppenform im Randbereich oder Verkleinerung der zu betrachteten Fläche (Abschneiden der Randbereiche).

Zur Berechnung der Priorität kann es verschiedene Rechenmethoden geben. Exemplarisch wird hier eine lineare Methode verwendet.
Dazu werden die einzelnen Pixelwerte P0, P1, P2, P3 und P4 einer Pixelgruppe in ihre Farbanteile Rot, Grün und Blau zerlegt. Jeder dieser Farbwerte wird durch 8 Bit repräsentiert. Für jede Farbe eines jeden Pixels P1-P4 wird nun ein Farbdifferenzwert in Bezug auf P0 ermittelt,
z.B. P0_rot - P1_rot, P0_rot - P2_rot, ... , P0_blau - P4_blau. Die absoluten Farbdifferenzwerte werden addiert und durch die Anzahl der Farben und Anzahl der betrachteten Pixel geteilt. Das Ergebnis ist ein Prioritätswert für die betrachtete Pixelgruppe. Dieser Prioritätswert ist umso höher, je unterschiedlicher die Farbwerte der einzelnen Pixel der Pixelgruppe sind.

Weitere Methoden zur Ermittlung des Prioritätswert sind die Benutzung von Grauwerten oder der Maximalwert einer Farbdifferenz einer Farbe. Da der Prioritätswert später selbst nicht übertragen, bzw. abgespeichert wird, hat das Verfahren zur Ermittlung des Prioritätswert keinen direkten Einfluss auf die Dekodierung.

Durch diese Priorisierung wird erreicht, dass Bildbereiche, die einen großen Farb- oder Kontrastwechsel aufweisen, wie z.B. Kanten, eine hohe Priorität erhalten, und relativ gleichbleibende Bildinhalte, wie z.B. blauer Himmel, eine Niedrige.

### Prioritätswerte sortieren

In diesem Schritt werden die Prioritätswerte der Größe nach absteigend sortiert. In Abhängigkeit der Implementierung kann eine Sortierung nach Ermittlung jedes neuen Prioritätswertes oder im nachhinein durchgeführt werden.

In Abhängigkeit der verfügbaren Ressourcen können neben der reinen Priorisierung durch die Farbwerte benachbarter Pixel auch Abhängigkeiten der Lage der priorisierten Pixelgruppen herangezogen werden.
Ein Anwendungsfall soll dies verdeutlichen. Betrachtet man auf See einen Horizont, erscheint dieser wie eine waagerechte Linie. Es ist zu erwarten, dass die Prioritätswerte jeder Pixelgruppe entlang diesem Horizont in etwa gleich sind. In diesem Fall besitzen die am weitesten auseinander liegenden Punkte der Horizontlinie die größte Aussagekraft. Durch Übertragung der äußersten linken und äußersten rechten Pixelgruppen des Horizonts ist es schon möglich, diesen wieder zu rekonstruieren.

Eine weitere Möglichkeit der Priorisierung liegt in der Höherbewertung bestimmter Bildbereiche. Ein solcher Bildbereich können zum Beispiel Gesichter auf Fotos sein. Obwohl Gesichter auf Urlaubsfotos manchmal nur einen prozentual kleinen Bereich des gesamten Bildes ausmachen, stehen sie beim Betrachten meist im Mittelpunkt. Ein solches menschliches Sehverhalten kann durch entsprechende Priorisierung der Pixelgruppen dieser Bildbereiche (Gesichtsbereiche) berücksichtigt werden. Ebenso können die Pixelgruppen im Zentrum des Bildes eine entsprechend höhere Priorisierung erfahren.

Eine weitere Möglichkeit der Optimierung besteht in der Tatsache, dass sich benachbarte Pixelgruppen gegenseitig überlagern. Durch geschickte Auswahl der Pixelgruppen kann vermieden werden, dass sich überlagernde Pixelwerte benachbarten Pixelgruppen wiederholt übertragen werden.

Wird das zu komprimierende Bild direkt mit einer CCD Kamera oder einem Scanner aufgenommen, besteht prinzipiell die Möglichkeit, aus dem in der Kamera / dem Scanner vorhandenen, bildbearbeitenden Mikrochip direkt ein nach Prioritäten sortiertes Array zu erhalten. Somit wird beim komprimieren ein wesentlicher Teil des Rechenaufwandes eingespart.

### Pixelgruppen abspeichern

Zunächst werden einige Kenngrößen des Bildes abgespeichert. Exemplarisch aufgeführt sind das:
- Bildbreite (in Pixel)
- Bildhöhe (in Pixel)
- Verwendete form der Pixelgruppe (nicht notwendig wenn nur eine Form standardisiert ist)
- Die 4 Pixelgruppen der Bildecken

Anschließend werden die einzelnen Pixelgruppen entsprechend ihrer Priorität abgespeichert, d.h. Pixelgruppen mit hoher Priorität werden zuerst gespeichert (und später auch zuerst ausgelesen).
Dazu wird zunächst der Positionswert des Bezugspixels p0 der Pixelgruppe abgespeichert. Anschließend werden die Pixelwerte P0, P1, P2, P3, P4 abgespeichert.

### Beispiel:

Positionswert P0, Pixelwerte P0, P1, P2, P3, P4; nächster Positionswert P0 (mit gleicher oder niedrigerer Priorität), Pixelwerte P1, P2, P3, P4, ... , nächster Positionswert P0 (mit geringster Priorität), Pixelwerte P0, P1, P2, P3, P4.

Das Abspeichern kann durch verschiedene Methoden, die hier nur exemplarisch angesprochen werden, optimiert werden.
Es kann eine Lauflängencodierung der Pixelgruppen vorgenommen werden. Z.B. wenn in einem Bildbereich keine Rotanteile vorkommen, kann dies anstelle von 8 Bit (rot) nur mit z.B. 2 Bit übertragen werden, oder es kann die Anzahl der führenden Nullen ausgenutzt werden.

Ferner können allgemein übliche Komprimierungsmethoden, z.B. Zip-Format, verwendet werden.
Durch Festlegung eines Grenzwertes für die Priorisierung kann eine bestimmte Qualität gewährleistet werden. Z.B. kann ein Grenzwert für die Pixeldifferenzwerte festgelegt werden unterhalb dessen die zugeordnete Pixelgruppe immer den niedrigsten Prioritätswert bekommt.
Bei einer Festlegung einer maximalen Dateigröße ist durch die Priorisierung sichergestellt, dass die wesentlichsten Bildinformationen zuerst abgespeichert werden.

### Dekomprimieren des Bildes:

### Neues Bildarray generieren

Zur Generierung eines neuen Bildes werden zunächst die Kenngrößen des Bildes eingelesen und ausgewertet.
Exemplarisch sind dies Bildbreite, Bildhöhe und Form der Pixelgruppe. Aus diesen Werten wird dann ein zunächst leeres Bildarray vergleichbar mit der Darstellung in Figur 1 erzeugt. Stimmen die Bildhöhe und Bildbreite zwischen dem Ursprungsbild und der nun gewünschten Darstellung (z.B. begrenztes PDA Display oder hochauflösender Bildschirm) nicht überein, muss entsprechend skaliert werden. Dazu werden zunächst Umrechnungsfaktoren ermittelt (Bildbreite_Orginal / Bildbreite_Display und Bildhöhe_Orginal / Bildhöhe_Display). Diese Faktoren können benutzt werden um den Positionswert von dem Originalbild in den Positionswert des neuen Displays umzurechnen.

### Eck-Pixelgruppen einfügen

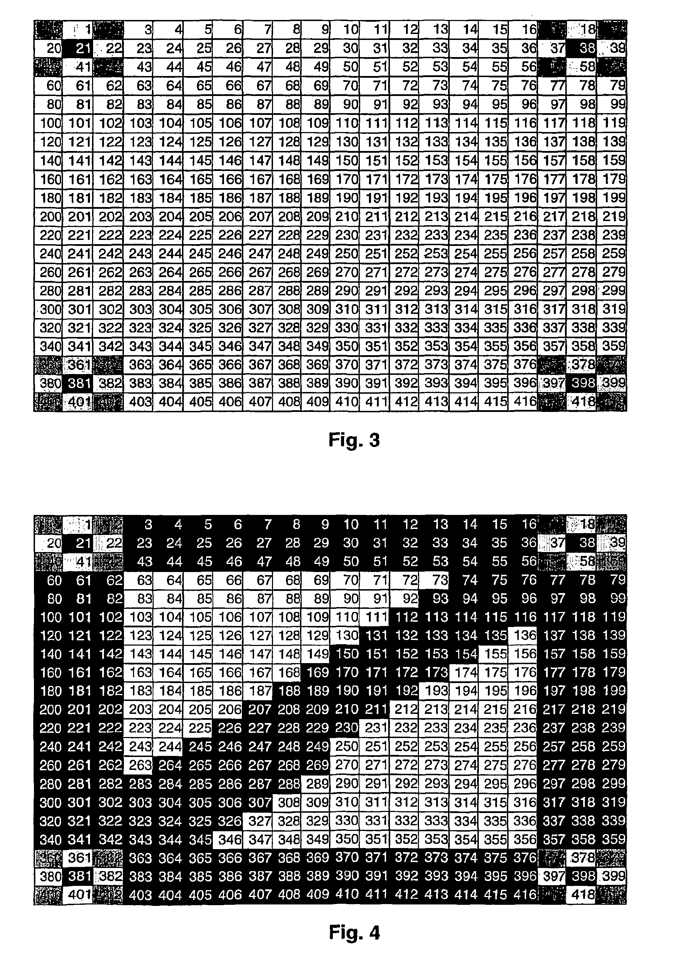

Wie in Figur 3 dargestellt ist, werden entsprechend der Reihenfolge der priorisierten Pixelgruppen diese nun eingelesen. Zunächst werden die 4 Pixelgruppen der Ecken in das neu generierte Bildarray eingetragen. Die Position (p0) der jeweiligen Pixelgruppe ist durch die schwarz unterlegten Felder 21, 38, 381 bzw. 398 bestimmt. Dieser Positionswert (p0) liegt als Integerwert in der abgespeicherten Datei vor. Anschließend können die zur jeweiligen Pixelgruppe gehörenden, dunkelgrau grau unterlegten Pixelwerte (p1-p4) in das neue Bildarray eingetragen werden. Die dazwischen liegenden, hellgrau markierten Pixelwerte lassen sich dann aus den dunkelgrau und schwarz markierten Feldern berechnen. Zur Berechnung werden zunächst die bekannten Pixelwerte in ihre Bestandteile Rot, Grün und Blau zerlegt. Anschließend wird der Mittelwert jeder Farbe berechnet, z.B. Pixel(22) = (Pixel(2) + Pixel(21) + Pixel(42))/3).

### Flächen ausfüllen

Nun werden die vorhandenen Pixelgruppen durch Linien miteinander verbunden. Es ergeben sich Dreiecke, dessen Ecken durch die entsprechenden Pixelgruppen definiert sind. Exemplarisch soll dies an der Linie zwischen Pixelposition 2 und Pixelposition 17 verdeutlicht werden. Der Farbverlauf der Linie wird anhand der Farbwerte der Pixel 2 und 17 berechnet. Zunächst wird die Anzahl der Pixel zwischen diesen beiden Positionen ermittelt, im Beispiel 14. Anschließend wird für jede Farbe (Rot, Grün, Blau) die Farbdifferenz ermittelt, z.B. Farbwert an Position 2 = 2; Farbwert an Position 17 = 30 ergibt Farbdifferenz von 28). Eine Farbwertsteigerung pro Pixel - vom Pixel 2 zum Pixel 17 - errechnet sich dann aus Farbdifferenz / Anzahl (im Beispiel 28/14 = 2).

Die noch übrigen Flächen werden durch Zeichnen von horizontalen Linien ausgefüllt, z.B. von Position 63 nach Position 74, von Position 82 nach Position 93, usw. Auch hier wird ein vorläufiger Farbverlauf zwischen den Punkten wie oben angegeben berechnet,

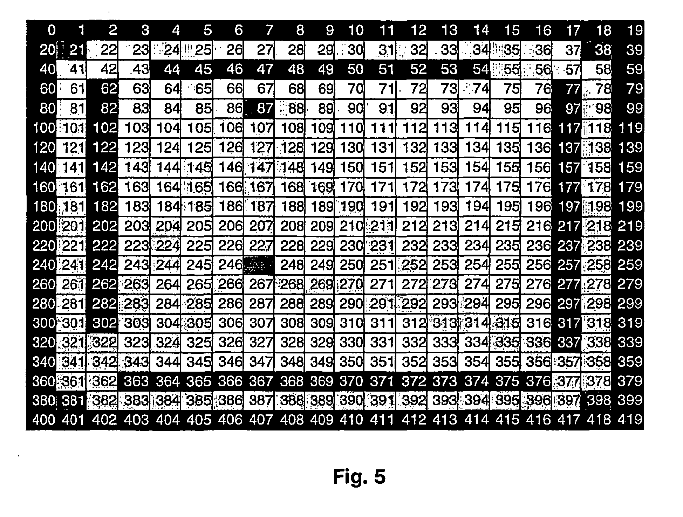

Wie Figur 5 zeigt, ergibt jede weitere hinzufügte Pixelgruppe weitere Dreiecke die entsprechend ausgefüllt werden können. Nachdem zunächst die gesamte Fläche durch Nutzung der 4 Eckpunkte (21, 38, 398, 381) ausgefüllt wurde, kann nun mit jeder weiteren Pixelgruppe die Auflösung verfeinert werden. Das Hinzufügen der Pixelgruppe 87 führt zu 4 Dreiecken mit den Bezugspunkten (21, 38, 87), (21, 87, 381), (381, 87, 398), (398, 78, 38). Wird nun innerhalb eines solchen Dreieckes, z.B. 87, 381, 398, eine weitere Pixelgruppe (247) eingefügt entstehen 3 neue Dreiecke (247,381,398), (247, 87, 381) und (247,87, 398). Jede neue Pixelgruppe erzeugt somit 3 neue Dreiecke, die ausgefüllt werden können. Je mehr Pixelgruppen eingefügt sind, d.h. je mehr Dreiecke gebildet werden, desto näher kommt der berechnete Farbverlauf dem tatsächlichen Farbverlauf des Bildes. Da ab nun immer nur neue Dreiecke entstehen, können für die Berechnungen optimierte Verfahren verwendet werden. Ferner können die jeweils 3 neu entstehenden Dreiecke parallel berechnet werden, um die Bearbeitungsgeschwindigkeit zu steigern. Zusätzliche Möglichkeit der Parallelisierung entsteht dadurch, wenn neue Pixelgruppen in unterschiedlichen Regionen des Bildes hinzugefügt werden.

## Patentansprüche

1. Verfahren zur Komprimierung von Bilddaten, die aus einem Array einzelner Bildpunkte (Pixel) bestehen, wobei jedes Pixel (0-419) einen Pixelwert aufweist, der Farb- oder Helligkeitsinformation des Pixels beschreibt,
**gekennzeichnet durch** die Schritte:
a) Ermitteln eines Prioritätswertes für jedes Pixel des Arrays **durch** Festlegen des verwendeten Pixels als Bezugspixel (P0) und Berechnen eines Pixeldifferenzwertes anhand des jeweiligen Pixelwerts des Bezugspixels (P0) in Bezug auf die Pixelwerte einer zuvor festgelegten Gruppe von benachbarten Pixeln (P1-P4);
b) Zusammenfassen der für die Berechnung des Prioritätswertes hinzugezogenen Pixel (P0-P4) zu einer Pixelgruppe,
c) Sortieren der Pixelgruppen des Bildarrays anhand des Prioritätswertes des zugeordneten Bezugspixels (P0); und
d) Abspeichern und/oder Übertragen der Pixelgruppen entsprechend ihrer Priorität, wobei je nach dem angestrebten Kompressionsfaktor nur ein Teil der Pixelgruppen abgespeichert und/oder übertragen wird.

2. Verfahren nach Anspruch 1, **dadurch gekennzeichnet, dass** der Pixeldifferenzwert sich aus der Differenz des Pixelwerts eines betrachteten Pixels zum Pixelwert jedes seiner betrachteten Nachbarpixel der Pixelgruppe ergibt.

3. Verfahren nach einem der vorhergehenden Ansprüche, **dadurch gekennzeichnet, dass** als erstes die Kenngrößen des Bildes, wie Bildbreite in Pixel, Bildhöhe in Pixel, Form der verwendeten Pixelgruppe und die Eck-Pixelgruppen der vier Bildecken abgespeichert und/oder übertragen werden.

4. Verfahren nach einem der vorhergehenden Ansprüche, **dadurch gekennzeichnet, dass** für jede Pixelgruppe die Position eines Bezugspixels (P0), dessen Pixelwert, sowie der Pixelwert der übrigen Pixel (P1-P4) der Pixelgruppe abgespeichert oder übertragen wird.

5. Verfahren nach einem der vorhergehenden Ansprüche, **dadurch gekennzeichnet, dass** Pixelgruppen bestimmter Bildbereiche eine erhöhte Priorität zugeordnet wird.

6. Verfahren nach einem der vorhergehenden Ansprüche, **dadurch gekennzeichnet, dass** die Pixelwerte der Pixelgruppen durch Lauflängencodierung oder andere Kompressionsverfahren weiter komprimiert werden.

7. Verfahren nach einem der vorhergehenden Ansprüche, **dadurch gekennzeichnet, dass** die Ermittlung und Ausgabe der nach Prioritäten sortierten Pixelgruppen bereits durch ein verwendetes bildaufnehmendes System, wie z.B. Scanner, CCD-Kamera, erfolgt.

8. Verfahren zur Dekomprimierung von Bilddaten, die mit dem Verfahren gemäß den Ansprüchen 1 bis 7 komprimiert wurden,
**gekennzeichnet durch** die Schritte:
a) Generieren eines leeren Bildarrays aus den eingelesenen Kenngrößen des komprimierten Bildes,
b) Einlesen der Eck-Pixelgruppen und Einfügen an den vier Bildecken des Bildarrays,
c) Bilden von Dreiecken **durch** Verbinden von jeweils drei unmittelbar benachbarter Pixelgruppen **durch** mindestens eine Linie,
d) Ausfüllen der die Fläche der Dreiecke bildenden Pixel **durch** einen aus den das Dreieck bildenden Pixelgruppen berechneten Farb-und/oder Helligkeitsverlauf,
e) Einlesen und Einfügen der nächsten Pixelgruppe in das Bildarray;
f) Wiederholen der Schritte c) bis f).

9. Verfahren nach Anspruch 8, **dadurch gekennzeichnet, dass** die Schritte c) bis f) solange wiederholt werden, bis alle oder eine gewünschte Anzahl von Bilddaten eingelesen und verarbeitet wurden.

10. Verfahren nach Anspruch 8 oder 9, **dadurch gekennzeichnet, dass** die Dreiecke in ihrer Größe skalierbar und an unterschiedliche Bildauflösungen anpassbar sind.

## Claims

1. Method for compressing image data consisting of an array of single image points (pixels), wherein each pixel (0-419) has a pixel value describing colour or brightness information of the pixel, **characterised by** the steps:
a) determination of a priority value for each pixel in the array by setting the pixel used as reference pixel (P0) and calculating a pixel difference value on the basis of the respective pixel value of the reference pixel (P0) with reference to the pixel values of a previously defined group of neighbouring pixels (P1-P4);
b) combining the pixels (P0-P4) drawn upon for calculating the priority value to form a group of pixels;
c) sorting the pixel groups of the picture array on the basis of the priority value of the assigned reference pixel (P0); and
d) storage and/or transmission of the pixel groups according to their priority, wherein depending on the targeted compression factor only a portion of the pixel groups is stored and/or transmitted.

2. Method according to claim 1, **characterised in that** the pixel difference value results from the difference of the pixel value of a pixel under consideration from the pixel value of each of its considered neighbouring pixels in the pixel group.

3. Method according to any of the preceding claims, **characterised in that** first of all the characterising variables of the image such as image width in pixels, image height in pixels, form of the pixel group used and the corner pixel groups of the four corners of the image are stored and/or transmitted.

4. Method according to any of the preceding claims, **characterised in that** for each pixel group the position of a reference pixel (P0), the pixel value thereof and the pixel value of the remaining pixels (P1-P4) of the pixel group is stored or transmitted.

5. Method according to any of the preceding claims, **characterised in that** pixel groups in certain regions of the image are allocated a higher priority.

6. Method according to any of the preceding claims, **characterised in that** the pixel values of the pixel groups are further compressed by run-length coding or other compression methods.

7. Method according to any of the preceding claims, **characterised in that** the identification and output of the pixel groups sorted according to priorities is already done by an image-recording system in use, such as a scanner, CCD camera.

8. Method for decompressing image data which have been compressed by the method according to claims 1 to 7, **characterised by** the steps:
a) generation of an empty image array from the read-in characterising variables of the compressed image;
b) reading in the corner pixel groups and inserting them at the four corners of the image in the image array;
c) forming triangles by connecting in each case three immediately neighbouring pixel groups by at least one line;
d) filling out the pixels forming the area of the triangles by a colour and/or brightness pattern calculated from the pixel groups forming the triangle;
e) reading in and inserting the next pixel group into the image array; and
f) repetition of steps c) to f).

9. Method according to claim 8, **characterised in that** steps c) to f) are repeated until all or a desired quantity of image data have been read in and processed.

10. Method according to claim 8 or 9, **characterised in that** the triangles are scalable in size and are adaptable to different image resolution levels.

## Revendications

1. Procédé de compression de données d'image qui se composent d'un ensemble de points d'image individuels (pixels), chaque pixel (0-419) présentant une valeur de pixel variable dans le temps qui décrit les informations de couleur ou de luminosité du pixel,
**caractérisé par** les étapes suivantes :
a) recherche d'une valeur de priorité pour chaque pixel de l'ensemble grâce à la détermination du pixel utilisé, comme pixel de référence (P0), et au calcul d'une valeur de différence de pixel à l'aide de la valeur de pixel momentanée du pixel de référence (P0) par rapport aux valeurs de pixel momentanées d'un groupe fixé précédemment de pixels voisins (P1-P4) ;
b) regroupement des pixels (P0-P4) utilisés pour le calcul de la valeur de priorité, en un groupe de pixels,
c) tri des groupes de pixels de la matrice d'image à l'aide de la valeur de priorité du pixel de référence associé (P0) ;
d) mise en mémoire et/ou transmission des groupes de pixels suivant leur priorité, étant précisé que suivant le facteur de compression recherché, une partie seulement des groupes de pixels sont mis en mémoire et/ou transmis.

2. Procédé selon la revendication 1, **caractérisé en ce que** la valeur de différence de pixels résulte de la différence de la valeur d'un pixel considéré, par rapport à la valeur de chacun de ses pixels voisins considérés du groupe de pixels.

3. Procédé selon l'une des revendications précédentes, **caractérisé en ce que** les grandeurs caractéristiques de l'image telles que la largeur d'image en pixels, la hauteur d'image en pixels, la forme du groupe de pixels utilisé et les groupes de pixels d'angle des quatre angles d'image sont mises en mémoire et/ou transmises en premier.

4. Procédé selon l'une des revendications précédentes, **caractérisé en ce que** pour chaque groupe de pixels sont mises en mémoire ou transmises la position d'un pixel de référence (P0), sa valeur de pixel et la valeur de pixel des autres pixels (P1-P4) du groupe de pixels.

5. Procédé selon l'une des revendications précédentes, **caractérisé en ce qu'**une priorité plus grande est attribuée à des groupes de pixels de zones d'image définies.

6. Procédé selon l'une des revendications précédentes, **caractérisé en ce que** les valeurs de pixel des groupes de pixels sont encore comprimées grâce à un codage de longueur ou à d'autres procédés de compression.

7. Procédé selon l'une des revendications précédentes, **caractérisé en ce que** la recherche et la sortie des groupes de pixels triés par priorités se font déjà grâce à un système de prise de vue utilisé, comme par exemple un scanner, une caméra à dispositif à transfert de charge.

8. Procédé de décompression de données d'image qui ont été comprimées à l'aide du procédé selon les revendications 1 à 7, **caractérisé par** les étapes suivantes :
a) production d'une matrice d'image vide à partir des
grandeurs caractéristiques entrées de l'image comprimée, b) entrée des groupes de pixels d'angle et insertion au niveau des quatre angles d'image de la matrice d'image,
c) formation de triangles grâce à la liaison de trois groupes de pixels directement voisins, à l'aide d'au moins une ligne,
d) remplissage des pixels formant la surface des triangles à l'aide d'une courbe de couleur et/ou de luminosité calculée à partir des groupes de pixels formant le triangle,
e) entrée et insertion du groupe de pixels suivant dans la matrice d'image,
f) reprise des étapes c) à f).

9. Procédé selon la revendication 8, **caractérisé en ce que** les étapes c) à f) sont reprises jusqu'à ce que la totalité ou un nombre voulu de données d'image ait été entré et traité.

10. Procédé selon la revendication 8 ou 9, **caractérisé en ce que** la taille des triangles peut être mise à l'échelle et les triangles peuvent être adaptés à différentes résolutions d'image.
